# EUROPÄISCHE PATENTSCHRIFT

(11) **EP 0 544 871 B1**
(45) Veröffentlichungstag und Bekanntmachung des Hinweises auf die Patenterteilung: **28.12.1994**
(21) Anmeldenummer: 92912686.0
(22) Anmeldetag: 19.06.1992
(51) Int. Cl.: B23D 63/14, B23D 63/00

(54) **MASCHINE ZUM MEHRSTUFIGEN BEARBEITEN VON KREISSÄGEBLÄTTERN**
MACHINE FOR MULTISTAGE MACHINING CIRCULAR SAW BLADES
MACHINE POUR L'USINAGE MULTIPHASE DE LAMES DE SCIES CIRCULAIRES

(30) Priorität: 21.06.1991 DE 4120567
(43) Veröffentlichungstag der Anmeldung: 09.06.1993
(73) Patentinhaber: VOLLMER WERKE MASCHINENFABRIK GMBH, D-88387 Biberach (DE)
(72) Erfinder: BECK, Ernst, D-7951 Maselheim (DE); RIEHLEIN, Fritz, D-7950 Biberach/Riss (DE); LENARD, Peter, D-7950 Biberach/Riss (DE); REIMANN, Hans-Joachim, D-7904 Dellmensingen (DE)
(74) Vertreter: Goetz, Rupert, Dipl.-Ing.
(86) Internationale Anmeldenummer: EP9201389
(87) Internationale Veröffentlichungsnummer: WO9300194

(56) Entgegenhaltungen:
- DE-C- 0 614 875
- FR-A- 2 320 156
- US-A- 3 717 052
- PATENT ABSTRACTS OF JAPAN, vol. 7, no. 227 (M-248)(1372) 7 October 1983 & JP-A-58 120 424 (SHIMOMURA KOGYO K.K.) 18 July 1983.
- SOVIET PATENTS ABSTRACS Section PQ, Week 9032, 19 September 1990 Derwent Publications Ltd. London, GB ; Class p54, AN 90-244725/32 & SU-A-1537 423 (VITEB GEAR GRINDING) 23 January 1990.

## Beschreibung

Die Erfindung betrifft eine Maschine zum mehrstufigen Bearbeiten von Kreissägeblättern gemäß Oberbegriff des Patentanspruches.

Bei einer bekannten Maschine dieser Gattung (DE 2940730 A1) ist eine Halterung für ein Sägeblatt zwischen einem Lötgerät und einem Paar Flankenschleifvorrichtungen angeordnet. Zum Reparieren eines mit Hartmetallplatten bestückten Sägeblattes werden zunächst diejenigen Zähne, die eine beschädigte Hartmetallplatte aufweisen, nacheinander zum Ablöten dieser Hartmetallplatten in den Arbeitsbereich des Lötgeräts gebracht. Anschließend werden alle freigewordenen Plattensitze mit einer Sitzschleifvorrichtung nachgearbeitet, die, ebenso wie die Flankenschleifvorrichtungen, dem Lötgerät diametral gegenüberliegt. Sodann werden, wiederum mit dem Lötgerät, neue Hartmetallplatten aufgelötet und schließlich diese Hartmetallplatten von den beiden Flankenschleifvorrichtungen an den Zahnflanken und, wenn nötig, in einem späteren Arbeitsgang auch am Zahnrücken geschliffen. Dabei wird das Sägeblatt jeweils in unmittelbarer Nachbarschaft des Zahns, an dem die Flankenschleifvorrichtungen arbeiten, zwischen zwei hydraulisch betätigbaren Klemmbacken eingespannt.

Der Erfindung liegt die Aufgabe zugrunde, die Bearbeitung eines Sägeblattes abzukürzen, an dessen Zähnen mehrere aufeinanderfolgende Schleifarbeitsgänge auszuführen sind.

Die Aufgabe ist erfindungsgemäß ausgehend von einer Maschine der eingangs beschriebenen Gattung durch durch die kennzeichnenden Merkmale des Patentanspruches gelöst.

Damit wird erreicht, daß in einem einzigen Umlauf des Sägeblattes sämtliche Zähne mehrere Schliffe erhalten können, beispielsweise in einer der beiden Bearbeitungsstationen einen Zahnrückenschliff und in der gegenüberliegenden Bearbeitungsstation je einen Schliff an den beiden seitlichen Zahnflanken. Es hat sich als unschädlich erwiesen, daß dabei ungefähr die Hälfte aller Zähne ihren Zahnrückenschliff vor den Zahnflankenschliffen erhält, während die Reihenfolge der Schliffe bei den übrigen Zähnen umgekehrt ist.

Die Klemmvorrichtungen sind aus einer Betriebsstellung, in der sie zum Klemmen des Sägeblattes bereitstehen, in eine Ruhestellung bewegbar, in der das Sägeblatt in axialer Richtung auf die Halterung aufsteckbar und von dieser abziehbar ist. Auf diese Weise wird der Sägeblattwechsel wesentlich erleichtert, da es im Gegensatz zur bisher üblichen Vorgehensweise nicht erforderlich ist, das Sägeblatt in seiner eigenen Ebene zwischen Klemmbacken einer Klemmvorrichtung einzuführen, ehe das Sägeblatt auf seine Halterung aufgesteckt werden kann.

Die Klemmvorrichtungen sind mittels je einer Schwenkvorrichtung parallel zu sich selbst zwischen ihrer Betriebsstellung und ihrer Ruhestellung hin- und herschwenkbar.

Bei der erfindungsgemäßen Maschine ist
- eine der beiden Schleifvorrichtungen und die zugehörige Klemmvorrichtung auf einem gemeinsamen ersten Schlitten angeordnet, dessen Abstand von der diametral gegenüberliegenden Schleifvorrichtung und der dieser zugeordneten Klemmvorrichtung in einer zum Sägeblatt diametralen Richtung veränderbar, und
- die diametral gegenüberliegende Schleifvorrichtung und die zugehörige Klemmvorrichtung auf einem gemeinsamen zweiten Schlitten angeordnet, der parallel zum Sägeblatt quer zur Bewegungsrichtung des ersten Schlittens verstellbar ist.

Ein Ausführungsbeispiel der Erfindung wird im folgenden anhand schematischer Zeichnungen mit weiteren Einzelheiten beschrieben. Es zeigen:
- Fig. 1: eine Vorderansicht einer Maschine zum Bearbeiten von Kreissägeblättern;
- Fig. 2: die Seitenansicht in Richtung des Pfeils II in Fig. 1;
- Fig. 3: einen vergrößerten Ausschnitt aus Fig. 1 mit weiteren Einzelheiten;
- Fig. 4: die zugehörige Draufsicht in Richtung des Pfeils IV in Fig. 3;
- Fig. 5: ein Schaltbild mit hydraulisch betätigten Vorrichtungen der Maschine.

Die dargestellte Maschine hat die Aufgabe, Sägeblätter 10 für Kreissägen schrittweise zu bearbeiten, wobei jeweils ein Zahn 12 an seinem Zahnrücken 14 und ein ungefähr diametral gegenüberliegender Zahn 16 an seinen beiden Zahnflanken 18 geschliffen werden soll.

Die Maschine hat ein Maschinengehäuse 20 mit einer unteren waagerechten Führung 22, auf der ein Schlitten 24 von Hand verschiebbar geführt und festklemmbar ist. Der Schlitten 24 trägt eine Säule 26, an deren oberem Ende eine Halterung 28 in Gestalt eines waagerechten, quer zur Führung 22 vorspringenden Zapfens mit der geometrischen Achse A befestigt ist. Die Halterung 28 dient zum Aufstecken des zu bearbeitenden Sägeblattes 10; dessen Durchmesser bestimmt die Stellung, in welcher der Schlitten 24 festgeklemmt wird.

Am Maschinengehäuse 20 ist ferner eine obere waagerechte Führung 30 ausgebildet, auf der ein Schlitten 32 längs einer zur Achse A normalen Achse B mittels eines Handrads 34 verstellbar ist. Auf dem Schlitten 32 ist eine Führung 36 ausgebildet, die in der abgebildeten Stellung senkrecht ist, und längs der eine Schleifvorrichtung 38 auf- und abbewegbar ist. Zur Schleifvorrichtung 38 gehört eine Schleifscheibe 40, deren Achse C sich in der abgebildeten Stellung parallel zur waagerechten Führung 30 erstreckt. Die Schleifscheibe 40 und deren Lagerung lassen sich mittels eines Schwenkantriebs 42 um eine Achse D schwenken, die sich parallel zur Führung 36 erstreckt. Längs der Achse D läßt sich die gesamte Schleifvorrichtung 38 mittels einer Kolbenzylindereinheit 44 heben und senken. Zum Antreiben der Schleifscheibe 40 ist ein Motor 46 vorgesehen. Die Richtung der Achse D in bezug auf die Senkrechte läßt sich mit einem Handrad 48 an den Freiwinkel der zu schleifenden Zahnrücken 14 anpassen.

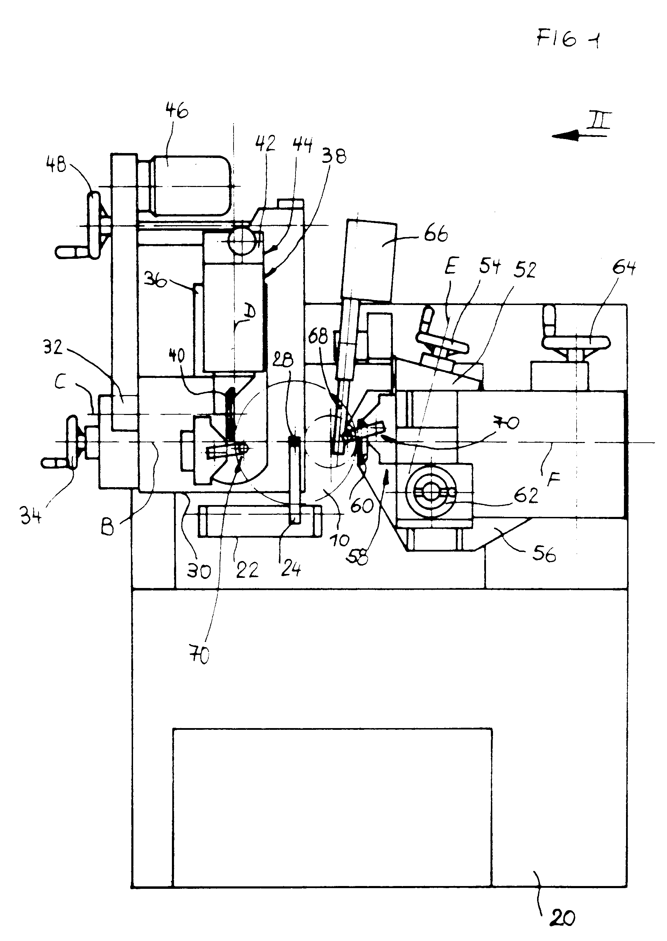

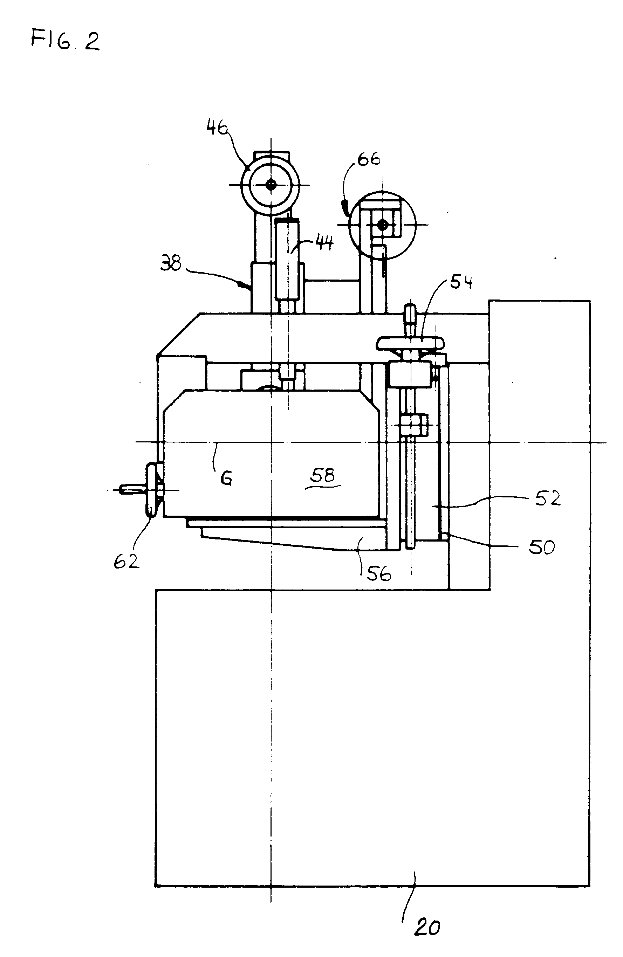

In einem waagerechten Abstand von der Führung 30, in Fig. 1 weiter rechts, ist am Maschinengehäuse 20 eine Führung 50 ausgebildet, deren geometrische Achse E sich unter einem rechten Winkel zur Achse A erstreckt und gegen die Senkrechte um einen Winkel von im dargestellten Beispiel 15° geneigt ist. Längs der Führung 50 ist ein Schlitten 52 mittels eines Handrads 54 verstellbar.

Der Schlitten 52 weist eine Konsole 56 auf, die eine Schleifvorrichtung 58 mit einem Paar Schleifscheiben 60 trägt. Die Achsen F der Schleifscheiben 60 erstrecken sich unter einem Winkel zum Sägeblatt 10, der zwischen 0° und 10° einstellbar ist und dem gewünschten Freiwinkel an den Zahnflanken 18 entspricht. Der Abstand der Schleifscheiben 60 voneinander läßt sich entsprechend der Dicke des zu bearbeitenden Sägeblattes 10 mittels eines Handrads 62 einstellen. Die Schleifscheiben 60 sind auf je einer nicht dargestellten Pinole gelagert und gemeinsam längs ihrer Achsen F in bezug auf die Schleifvorrichtung 58 hin- und herbewegbar, beispielsweise mittels einer gemeinsamen Kolbenzylindereinheit.

Die gesamte Schleifvorrichtung 58 ist in bezug auf die Konsole 56 mittels eines weiteren Handrads 64 um eine waagerechte Achse G schwenkbar, die zur Achse A parallel ist. Dadurch läßt sich die Schleifvorrichtung 58 an unterschiedliche Spanwinkel der zu bearbeitenden Zähne 12 und 16 anpassen. Das Maschinengehäuse 20 trägt ferner eine Vorschubeinrichtung 66 bekannter Bauart mit einer Klinke 68, mit der sich das Sägeblatt 10 schrittweise derart drehen läßt, daß jeweils ein Zahn 12 im Arbeitsbereich der Schleifvorrichtung 38 steht, während der gegenüberliegende Zahn 16 im Arbeitsbereich der Schleifvorrichtung 58 steht.

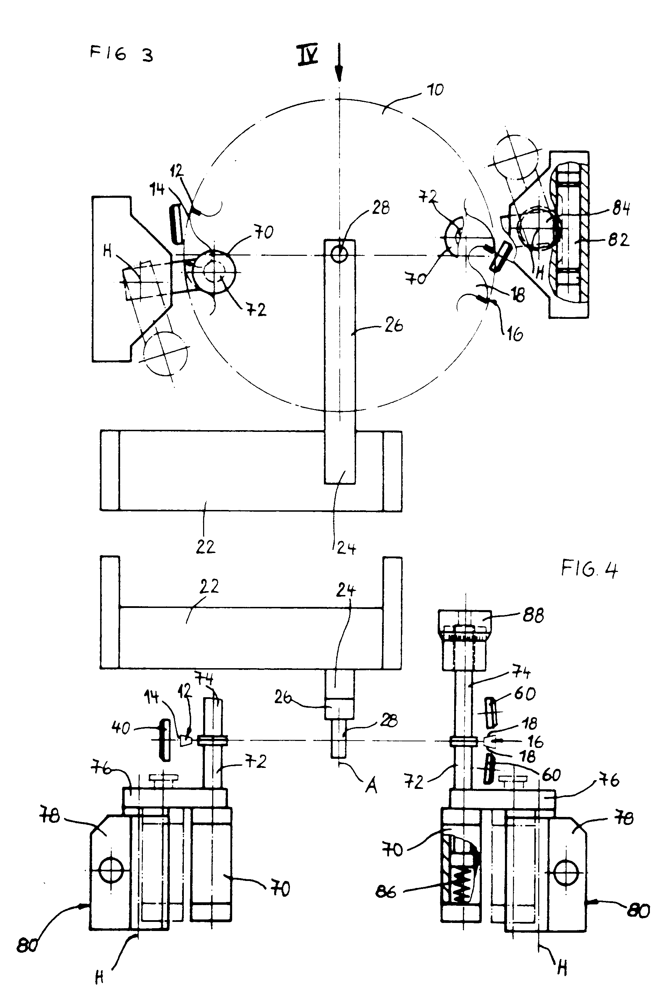

Beiden Schleifvorrichtungen 38 und 58 ist je eine Klemmvorrichtung 70 zugeordnet, die an je einem der Schlitten 30 und 52 einstellbar befestigt sind. Die beiden Klemmvorrichtungen 70 sind in Fig. 3 und 4 mit vollen Linien in einer Betriebsstellung und mit strichpunktierten Linien in einer Ruhestellung abgebildet. In jeder dieser beiden Stellungen stehen die beiden Klemmvorrichtungen einander diametral gegenüber; in der Betriebsstellung haben sie voneinander einen Abstand, der etwas kleiner ist als der Durchmesser des Sägeblattes 10, während ihr Abstand in der Ruhestellung deutlich größer ist als dieser Durchmesser. Jede der Klemmvorrichtungen 70 hat einen hydraulisch betätigbaren Stößel 72, der sich parallel zur Achse A erstreckt und in der Betriebsstellung einem Widerlager 74 derart gegenübersteht, daß das Sägeblatt 10 zwischen jedem der Stößel 72 und dem zugehörigen Widerlager 74 festklemmbar ist, und zwar in unmittelbarer Nähe des Zahns 12 bzw. 16, der jeweils geschliffen werden soll.

Jede der Klemmvorrichtungen 70 ist am Ende eines Arms 76 befestigt, der in einem Gehäuse 78 um eine Achse H schwenkbar gelagert ist. Jedem der Arme 76 ist eine Schwenkvorrichtung 80 in Gestalt einer doppeltwirkenden hydraulischen Kolbenzylindereinheit zugeordnet, die über eine an ihr ausgebildete Zahnstange 82 mit einem Ritzel 84 auf ein Ritzel 84 einwirkt, das mit dem zugehörigen Arm 76 fest verbunden ist.

Gemäß Fig. 4 ist der Stößel 72 jeder der beiden Klemmvorrichtungen 70 durch eine Feder 86 in Richtung zum zugehörigen Widerlager 74 hin vorgespannt. Jedes der Widerlager 74 ist mittels einer Micrometerschraube 88 derart einstellbar, daß das Sägeblatt 10 unabhängig von seiner Dicke in einer vorbestimmten Stellung seiner Mittelebene festgeklemmt werden kann.

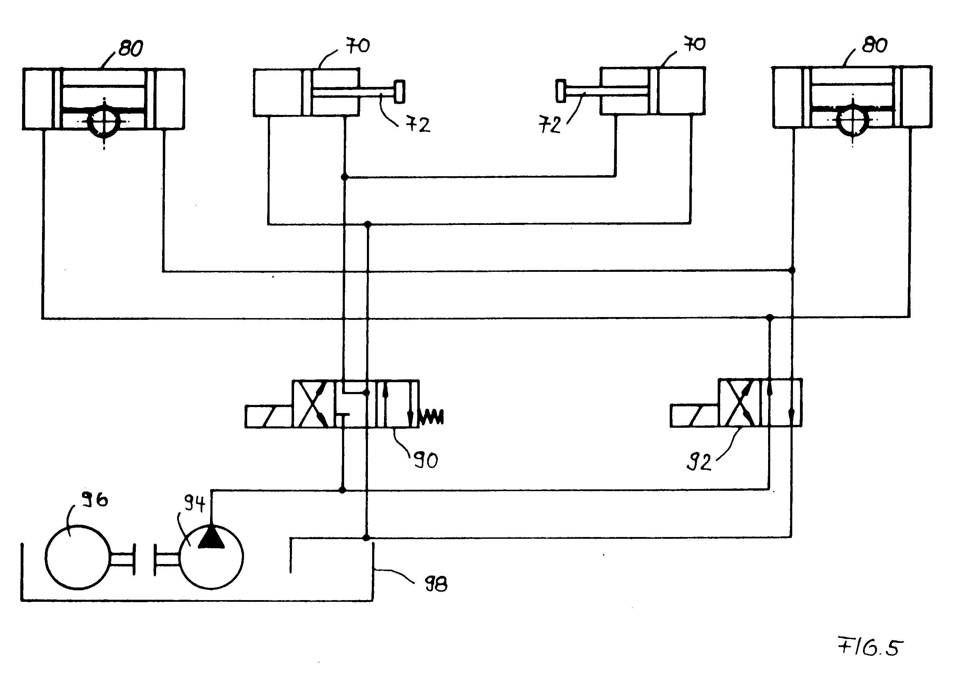

Die beiden Klemmvorrichtungen 70 sind gemäß Fig. 5 als doppeltwirkende Kolbenzylindereinheiten ausgebildet, die von einem gemeinsamen Mehrwegeventil 90 gesteuert werden. Die ebenfalls als doppeltwirkende Kolbenzylindereinheiten ausgebildeten Schwenkvorrichtungen 80 werden in entsprechender Weise von einem gemeinsamen Mehrwegeventil 92 gesteuert. Die beiden Mehrwegeventile 90 und 92 werden von einer Pumpe 94 gespeist, die von einem Motor 96 angetrieben wird und Hydraulikflüssigkeit aus einem Behälter 98 fördert.

## Patentansprüche

1. Maschine zum mehrstufigen Bearbeiten von Kreissägeblättern mit
- einer Halterung (28), auf die ein Sägeblatt (10) aufsteckbar ist,
- einer Vorschubeinrichtung (66), mit der sich das Sägeblatt (10) schrittweise drehen läßt,
- zwei Bearbeitungsstationen, die in bezug auf die Halterung (28) einander diametral gegenüber angeordnet sind,
- zwei Klemmvorrichtungen (70), die zum Festklemmen des Sägeblattes (10) in je einer der Bearbeitungsstationen angeordnet sind,
- einem ersten Schlitten (32) in einer der Bearbeitungsstationen, der eine erste Vorrichtung zum Bearbeiten von Sägezähnen sowie eine der Klemmvorrichtungen (70) trägt und längs einer zur Achse der Halterung normalen Achse (B) einstellbar ist, und
- einem zweiten Schlitten (52) in der anderen Bearbeitungsstation, der eine Schleifvorrichtung (58) sowie die andere Klemmvorrichtung (70) trägt und längs einer sich parallel zum Sägeblatt (10) quer zur Bewegungsrichtung des ersten Schlittens (32) erstreckenden Achse (E) einstellbar ist,
- wobei die vom zweiten Schlitten (52) getragene Schleifvorrichtung (58) zum gleichzeitigen Schleifen zweier Zahnflanken jeweils eines Zahnes ein Paar Schleifscheiben (60) aufweist, die entsprechend einem gewünschten Zahnflanken-Freiwinkel einstellbare Achsen (F) aufweisen und längs dieser Achsen (F) hin- und herbewegbar sind,
dadurch **gekennzeichnet**, daß
- der erste Schlitten (32) ebenfalls eine Schleifvorrichtung (38) trägt,
- die vom ersten Schlitten (32) getragene Schleifvorrichtung (38) eine Schleifscheibe (40) zum Schleifen von Zahnrücken (14) aufweist und
- die beiden Schleifvorrichtungen (38,58) derart gesteuert sind, daß sie gleichzeitig auf je einen von zwei diametral gegenüberliegenden Zähnen (12,16) des Sägeblattes (10) einwirken, während dieses festgeklemmt ist.

## Claims

1. A machine for multistage machining circular saw blades comprising
- a holding means (28) to which a saw blade (10) can be attached,
- a feeding means (66) for the stepwise rotation of the saw blade (10),
- two machining stations diametrically arranged opposite to each other with regard to said holding means (28),
- two clamping means (70) for clamping the saw blade (10) in one of the machining stations, respectively,
- a first carriage (32) provided in one of said machining stations which supports a first device for machining saw teeth as well as one of the clamping means (70) and is adjustable along an axis (B) which is normal to the axis of the holding means, and
- a second carriage (52) provided in the second machining station which supports a grinding device (58) as well as the second clamping means (70) and is adjustable along an axis (E) which extends parallel to the saw blade (10) transverse to the direction of movement of said first carriage (32),
- said grinding device (58) supported by said second carriage (52) comprising a pair of grinding wheels (60) for simultaneously grinding two tooth profiles of one tooth, respectively, said grinding wheels having adjustable axes (F) corresponding to a desired clearance angle of the tooth profile and being reciprocally movable along said axes (F),
**characterized** in that
- said first carriage (32) also supports a grinding device (38),
- said grinding device (38) supported by said first carriage (32) is provided with a grinding wheel (40) for grinding backs (14) of teeth, and
- said two grinding devices (38, 58) are controlled in such a manner that they simultaneously act upon a respective one of two diametrically opposed teeth (12, 16) of said saw blade (10) while same is being clamped.

## Revendications

1. Machine pour l'usinage en plusieurs étapes de lames de scie circulaire comprenant
- un dispositif de support (28) sur lequel une lame de scie (10) peut être placée,
- un dispositif d'avance (66) avec lequel la lame de scie (10) peut être amenée à tourner par pas,
- deux postes d'usinage qui, par rapport au dispositif de support (28), sont disposés de manière diamétralement opposée l'un à l'autre,
- deux dispositifs de blocage (70) qui sont disposés chacun dans l'un des postes d'usinage pour le blocage de la lame de scie (10),
- un premier chariot (32) dans l'un des postes d'usinage, qui porte un premier dispositif pour l'usinage de lames de scie et l'un des dispostifs de blocage (70) et qui peut être réglé le long d'un axe (B) perpendiculaire à l'axe du dispositif de support, et
- un second chariot (52) dans l'autre poste d'usinage, qui porte un dipositif d'affûtage (58) et l'autre dispositif de blocage (70) et qui peut être réglé le long d'un axe (E) qui s'étend parallèlement à la lame de scie (10), transversalement à la direction de mouvement du premier chariot (32),
- le dispositif d'affûtage (58) porté par le second chariot (52) comportant, pour l'affûtage simultané de deux profils d'une dent, une paire de meules (60) qui comportent des axes (F) réglables en fonction d'un angle de dépouille de profil de dent souhaité et qui sont mobiles dans un sens et dans l'autre le long de ces axes (F), caractérisée en ce que :
- le premier chariot (32) porte également un dispositif d'affûtage (38),
- le dispositif d'affichage (38) porté par le premier chariot (32) comporte une meule (40) pour l'affûtage de dos de dent (14) et
- les deux dispositifs d'affûtage (38, 58) sont commandés de telle manière qu'ils agissent simultanément chacun sur une dent parmi deux dents diamétralement opposées (12, 16) de la lame de scie (10) tandis que celle-ci est bloquée.
